Europäisches Patentamt

European Patent Office

Office européen des brevets

(11) Veröffentlichungsnummer: **0 223 936 B1**

# EUROPÄISCHE PATENTSCHRIFT

(45) Veröffentlichungstag der Patentschrift: **26.02.92**

(21) Anmeldenummer: **86112039.2**

(22) Anmeldetag: **30.08.86**

(51) Int. Cl.⁵: **H01S 3/03**, H01S 3/086

(54) **Gaslaser.**

(30) Priorität: **26.11.85 DE 3541744**

(43) Veröffentlichungstag der Anmeldung:
**03.06.87 Patentblatt 87/23**

(45) Bekanntmachung des Hinweises auf die
Patenterteilung:
**26.02.92 Patentblatt 92/09**

(84) Benannte Vertragsstaaten:
**DE FR GB**

(56) Entgegenhaltungen:
**EP-A- 0 146 509**
**GB-A- 2 071 904**
**US-A- 3 732 013**
**US-A- 3 943 461**

**INSTRUMENTS AND EXPERIMENTAL TECHNI-**
**QUES, Band 25, Nr. 6, Teil 2, November-**
**Dezember 1982, Seiten 1473-1475, Plenum**
**Publishing Corp., New York, US; SH. KH. ZA-**
**KIROV et al.: "Small-size CO2 laser with**
**transverse high-frequency excitation"**

**PATENT ABSRTRACTS OF JAPAN, Band 8,**
**Nr. 13 (E-222)[1450], 20. Januar 1984; & JP-**
**A-58 178 578**

(73) Patentinhaber: **Heraeus Instruments GmbH**
**Heraeusstrasse 12-14**
**W-6450 Hanau am Main(DE)**

(72) Erfinder: **Gorisch, Wolfram, Dr.**
**Bayernstrasse 38**
**W-8750 Aschaffenburg(DE)**
Erfinder: **Nitsche, Rainer, Dr.**
**Wilhelm-Leuschner-Strasse 6**
**W-6050 Offenbach(DE)**
Erfinder: **Skrlac, Walter, Dr.**
**Justus-Liebig-Strasse 3**
**W-6454 Bruchköbel(DE)**
Erfinder: **Wendt, Dieter**
**Fritz-Schubert-Ring 21**
**W-6454 Bruchköbel(DE)**
Erfinder: **Wohlfart, Walter**
**Brentanostrasse 21**
**W-8752 Kleinostheim(DE)**
Erfinder: **Ernst, Volker**
**Hofmarkstrasse 5**
**W-8037 Olching(DE)**
Erfinder: **Kirchner, Walter**
**Echinger Strasse 4**
**W-8087 Türkenfeld(DE)**
Erfinder: **Weyer, Volker**
**Zur Denkstätte 1a**
**W-8080 Emmering(DE)**

EP 0 223 936 B1

EP 0 223 936 B1

(74) Vertreter: **Grimm, Ekkehard**
**Heraeus Holding GmbH Heraeusstrasse 12 -**
**14**
**W-6450 Hanau/Main(DE)**

## Beschreibung

Die Erfindung betrifft einen Gaslaser, insbesondere mit radialer Anregung, der zwei seinen Anregungsraum in axialer Richtung begrenzende Spiegel, die jeweils mit einem Radialflansch verbunden sind, und eine Faltenbalg-Abdichtung zwischen Anregungsraum und Radialflansch aufweist, wobei die Radialflansche über Distanzstäbe miteinander verbunden sind.

Ein derartiger Laser ist aus der DE-OS 30 09 611 bekannt. Bei diesem Laser sind die am Endflansch angeordneten Resonatorspiegel über die Metallbälge mit dem Laserrohr verbunden und zentriert. Insbesondere soll durch die Faltenbalganordnung eine ungehinderte Längenausdehnung des Laserkörpers möglich sein. Aus der Zeichnung dieser Offenlegungsschrift ist erkennbar, daß die einzelnen Bauteile, insbesondere der Laserendspiegel, über einen Schraubring dichtend verspannt werden. Hierzu ist am Endflansch ein Außengewinde angedeutet. Nachteilig ist bei einer derartigen Spiegelanordnung, daß über einen solchen Spannring Druck auf den Spiegel ausgeübt wird, so daß eine spannungs- und verzugsfreie Lagerung nicht gewährleistet ist.

Der vorliegenden Erfindung liegt nun die Aufgabe zugrunde, ein Laser zu schaffen, bei dem die Spiegel verzugsfrei gehalten sind, dessen Spiegel darüber hinaus druckfrei gelagert sind und der eine einfache Spiegelvorjustierung und eventuelle Spiegelnachjustierung ermöglicht und bei dem schließlich die Möglichkeit gegeben ist, die Spiegel auch beim Betrieb des Lasers verzugsfrei zu halten.

Diese Aufgabe wird bei einem Laser der eingangs beschriebenen Art dadurch gelöst, daß die Spiegel mit dem jeweiligen Radialflansch eine Baueinheit bilden, daß jeder Radialflansch auf seiner dem Anregungsraum abgekehrten Seite gasdicht über einen angeschweißten Faltenbalg mit einem den Laserinnenraum gegen die Außenatmosphäre abschließenden Endteil verschweißt ist und daß die Radialflansche an den Dinstanzstäben kippbar gelagert sind.

Durch diese Anordnung sind die Resonator-Spiegel jeweils zwischen zwei Faltenbälgen gelagert, so daß beidseitig des Spiegels bzw. des Spiegelkörpers der Druck des Resonatorinnenraumes wirkt. Weiterhin bringt dieser Aufbau den Vorteil mit sich, daß die Spiegel mit den Radialflanschen, die als Baueinheit vorgefertigt sind, und die daran angeschweißten Faltenbälge in den Laser eingeschweißt werden können, ohne daß hierbei durch Wärmeeinwirkung ein Verzug des Spiegelkörpers auftritt. Die Spiegel und zugehörigen Radialflansche können aus einem Materialblock gefertigt sein oder aus zwei Bauteilen bestehen, die vor dem Einbau miteinander verbunden werden; verlötet oder verschweißt.

Der angegeben Laseraufbau hat sich insbesondere für Laser mit Multipass bewährt, da gerade bei einer solchen Laserkonfiguration bereits geringe Verformungen der Spiegel zu Dejustierungen führen.

Für den Zusammenbau des angegebenen Lasers hat sich folgende Verfahrensweise als vorteilhaft erwiesen : Zunächst wird ein Materialblock, der den Spiegelkörper bildet, vor dem Aufbringen der spiegelnden Fläche mit einem Flansch verlötet oder verschweißt. Alternativ hierzu kann der Spiegelkörper und der Flansch aus einem Materialblock herausgearbeitet werden. Anschließend wird dieser Körper getempert. Zeit und Temperatur werden so gewählt, daß sie ausreichen, um innere mechanische Spannungen des zu bearbeitenden Körpers, die insbesondere bei einem Körper auftreten können, der aus zwei verschweißten Teilen besteht, auszuheilen. Im Falle eines Kupfer-Materialblockes beträgt die Temperzeit zwischen 1 und 5 Stunden bei einer Temperatur zwischen 250 und 400° C. Anschließend oder nach weiterer mechanisch nicht belastenden Zwischenschritten werden die Spiegel in die dafür vorgesehenen Bereiche des Materialblockes eingearbeitet. Dieser Verfahrensschritt wird vorzugsweise durch Bearbeitung mit Diamantwerkzeugen durchgeführt. An diesen Spielgelkörper mit Flansch werden nun die Faltenbälge angelötet oder, bevorzugt mittels Laser, angeschweißt. Da es sich bei diesen Faltenbälgen um dünne, weiche Elemente handelt, ist deren Anschweißen an den Flansch bzw. die Spiegelkörper-Flansch-Baueinheit nicht als kritisch anzusehen. Die mit den Faltenbälgen versehene Spiegelkörper-Flansch-Baueinheit wird dann in den Laser eingebaut.

Mit den Faltenbälgen beidseitig der Flansche ist ein einfaches Verkippen der Spiegel zur Justierung des Lasers möglich.

Um zur Bearbeitung der Spiegelkörper eine gute Zugänglichkeit im Bereich der herauszuarbeitenden Spiegelfläche zu gewährleisten, hat es sich als vorteilhaft erwiesen, daß jeder Spiegelkörper über die dem Anregungsraum zugekehrte Radialebene des Radialflansches vorsteht.

Bevorzugt werden, bevor die Spiegelfläche in den Spiegelkörper eingearbeitet wird, die beiden Faltenbälge mit dem Radialflansch verschweißt oder verlötet. Hierbei ist von Vorteil, daß die axiale Länge des über die Radialebene vorstehenden Spiegelkörpers größer ist als die axiale Länge des dem Anregungsraum zugekehrten Faltenbalges bzw. Schweiß-Vorsprungs, so daß die zu bearbeitende Spiegelfläche frei zugänglich ist. Mit dem erfindungsgemäßen konstruktiven Aufbau des Lasers bzw. dessen Spiegelhalterung ist die Möglichkeit gegeben, Maßnahmen zu ergreifen, die Spiegel auch beim Betrieb des Lasers verzugsfrei zu hal-

3

ten. Hierzu wird der Spiegelkörper mit einem Radialflansch verbunden, der in dem der Spiegelfläche nahen Bereich des Spiegelkörpers mindestens einen Kühlkanal aufweist. Dieser Kühlkanal kann problemlos in den Radialflansch in Form einer Nut eingefräst werden, bevor der Radialflansch dann mit dem Spiegelkörper beispielsweise verschweißt oder verlötet wird. Begrenzt wird dieser Kühlkanal durch die Radialfläche des Spiegelkörpers. Während des Laserbetriebes wird dieser Kühlkanal von Gas oder Flüssigkeit durchströmt und der Spiegelkörper auf einer konstanten, niedrigen Temperatur gehalten, so daß temperaturbedingte Verformungen des Spiegels ausgeschlossen werden. Eventuell während des Laserbetriebes auftretende Temperaturgradienten, die zu einer Verformung und folglich zu einer Verstimmung der Spiegel führen könnten, werden im Bereich der Spiegelkörper unterdrückt. Zur Spiegeljustierung, insbesondere zur Spiegelnachjustierung, sind die Radialflansche gegen die Distanzstäbe kippbar gelagert und mittels an den Distanzstäben angebrachten Schraubelementen einstellbar. Hierzu können die Distanzstäbe, von denen vorzugsweise drei eingesetzt werden und die aus längeninvariantem Material (Invar, Quarz, Cerodur) bestehen, ein Außen-Feingewinde tragen, auf die jeweils zwei Justiermuttern aufgesetzt sind, zwischen denen die Radialflansche feststellbar sind.

Um ein einfaches Verschweißen der Faltenbälge mit den Radialflanschen zu ermöglichen, sind im Bereich der Verbindungsstellen beidseitig der Radialflansche Vorsprünge von Vorteil.

Weitere Einzelheiten und Merkmale der Erfindung ergeben sich aus der nachfolgenden Beschreibung eines Ausführungsbeispieles anhand der Zeichnung. In der Zeichnung zeigt:

Figur 1     eine schematische Darstellung eines Lasers mit Multipass, bei dem als Faltungsspiegel erfindungsgemäß ausgebildete Spiegel eingesetzt sind und

Figur 2     eine vergrößerte Darstellung eines der beiden Faltungsspiegeln nach Figur 1.

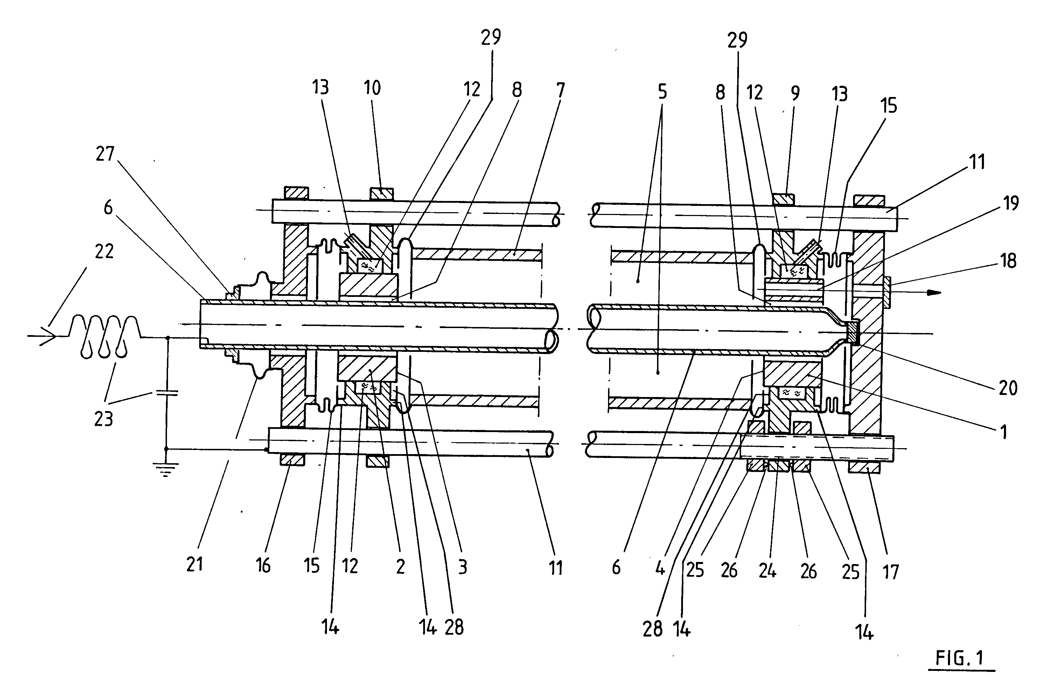

Der in Figur 1 dargestellte Laser weist zwei Spiegelkörper 1 und 2 auf, deren Spiegelflächen 3 und 4 den Laserraum 5 (Anregungsraum) axial begrenzen. Radial ist der Laserraum von einer Innenelektrode 6 und einer Außenelektrode 7 begrenzt, die einen Ringraum bildend mit Abstand zueinander angeordnet sind.

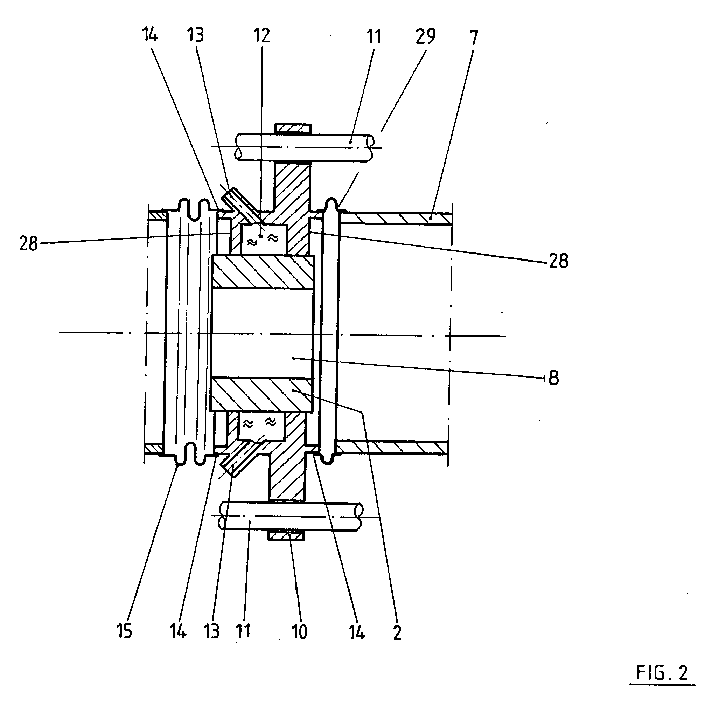

Wie Figur 2 zeigt, sind die Spiegelkörper dickwandige Zylinderabschnitte, durch deren Öffnung 8 die Innenelektrode hindurch geführt ist. An der Außenseite dieser Spiegelkörper 1, 2 ist jeweils ein Radialflansch 9, 10 angeschweißt oder angelötet, der seinerseits an der äußeren Tragestrukter des Lasers in Form von Haltestangen 11 (Distanzstäbe), beispielsweise aus Invar oder Quarz, geführt ist. Die Radialflansche 9, 10 sind mit einer Ringnut 12 versehen, die einseitig von der Außenfläche der Spiegelkörper 1, 2 begrenzt werden. Durch diese Ringnut wird ein Kühlmittel, beispielsweise Wasser, über einen Einlaß- bzw. Auslaßstutzen 13 zu- bzw. abgeführt und der Spiegelkörper während des Betriebes gekühlt, so daß durch Temperaturschwankungen bedingte Verformungen des Spiegelkörpers und damit der Spiegelflächen ausgeschaltet werden. Falls solche Kühlmaßnahmen nicht erforderlich sind, kann der Spiegelkörper 1, 2 und der dazugehörige Radialflansch 9, 10 aus einem Materialblock gefertigt sein. Jeder der beiden Radialflansche zeigt an seinen beiden Radialebenen 28 jeweils einen ringförmigen Vorsprung 14, mit dem jeweils ein mechanisch weiches Zwischenelement in Form eines Faltenbalges 15 angeschweißt ist, beispielsweise durch Laserschweißen. Über diese Faltenbälge sind die Spiegel-Radialflansch-Baueinheiten einerseits mit der Außenelektrode 7 verschweißt, während die dem Laseranregungsraum 5 abgekehrten Faltenbälge 15 mit Abschlußplatten 16, 17 (Endteile) verbunden sind. Diese Abschlußplatten 16, 17 sind unverrückbar mit den Haltestangen 11 verbunden. Die eine Abschlußplatte, in Figur 1 mit dem Bezugszeichen 17 bezeichnet, weist ein Fenster 18 auf, aus dem der Laserstrahl, nachdem er den Ringraum 5 zwischen den als Faltungsspiegel dienenden Spiegelflächen 3, 4 durchlaufen hat, austritt. Entsprechend der Lage dieses Fensters 18 ist in den Spiegelkörper 1 eine Austrittsöffnung 19 in Form einer durch den Spiegelkörper hindurchführenden Bohrung vorgesehen.

Während die Innenelektrode 6 in der mit dem Bezugszeichen 17 bezeichneten Abschlußplatte über einen in einer entsprechenden Ausnehmung eingreifenden Zapfen 20 gelagert ist, ist sie durch die andere Abschlußplatte 16 hindurch nach außen geführt und über einen weiteren Faltenbalg 21, der mit dieser Abschlußplatte 16 einerseits und mit einem auf die Innenelektrode aufgesetzten Abschlußring 27 verbunden ist.

Die elektrische Versorgung des Lasers ist in Figur 1 schematisch in Form eines Hochfrequenzgenerators 22 und eines Impedanzanpassungsgliedes 23 dargestellt.

Zur Justierung der Spiegelkörper 1, 2 mit den Spiegelflächen 3, 4 sind auf die Haltestangen 11 jeweils beidseitig der Radialflansche 9, 10 Schraubelemente 25 (Stellschrauben) auf ein Feingewinde 24 der Haltestangen 11 aufgeschraubt, durch deren Verdrehen entlang der Haltestangen 11 die Radialflansche 9, 10 mit dem Spiegelkörper verkippt werden können. Bevorzugt weisen diese Schraubelemente 25 Nasen 26 auf, so daß ein punktförmiges Lager gebildet wird. Da jeder der Radialflansche 9, 10 an jeden der vorhandenen Haltestangen 11 mittels solchen Schraubelementen fixiert ist, ist ein Verkippen und damit ein Einstellen der Spiegelflächen in allen Richtungen möglich.

Diese Schraubelemente 25 sind zugänglich, so daß auch nach Inbetriebnahme des Lasers eine Nachjustierung problemlos möglich ist.

**Patentansprüche**

1.  Gaslaser, insbesondere mit radialer Anregung, der zwei seinen Anregungsraum in axialer Richtung begrenzende Spiegel, die jeweils mit einem Radialflansch verbunden sind, und eine Faltenbalg-Abdichtung zwischen Anregungsraum und Radialflansch aufweist, wobei die Radialflansche über Distanzstäbe miteinander verbunden sind, dadurch gekennzeichnet, daß die Spiegel bzw. Spiegelkörper (1, 2) mit dem jeweiligen Radialflansch (9, 10) eine Baueinheit bilden, daß jeder Radialflansch (9, 10) auf seiner dem Anregungsraum (5) abgekehrten Seite gasdicht über einen angeschweißten Faltenbalg (15) mit einem den Laserinnenraum gegen die Außenatmosphäre abschließenden Endteil (16, 17) verschweißt ist und daß die Radialflansche (9, 10) an den Distanzstäben (11) kippbar gelagert sind.

2.  Gaslaser nach Anspruch 1, wobei jeder Spiegelkörper (1, 2) über die dem Anregungsraum (5) zugekehrte Radialebene (28) des Radialflansches (9, 10) vorsteht.

3.  Gaslaser nach Anspruch 2, wobei die axiale Länge des über die Radialebene (28) vorstehenden Spiegelkörpers (1, 2) größer ist als die axiale Länge des dem Anregungsraum (5) zugekehrten Faltenbalges (15).

4.  Gaslaser nach einem der Ansprüche 1 bis 3, wobei jeder Radialflansch (9, 10) in dem dem Spiegelkörper (1, 2) nahen Bereich mindestens einen Kühlkanal (12) aufweist.

5.  Gaslaser nach einem der Ansprüche 1 bis 4, wobei die Verkippbarkeit der Radialflansche (9, 10) mittels an den Distanzstäben (11) angebrachten Schraubelementen (25) einstellbar ist.

6.  Gaslaser nach einem der Ansprüche 1 bis 5, wobei die Radialflansche (9, 10) beidseitig Vorsprünge (14) aufweisen, an denen die Faltenbälge (15) angeschweißt sind.

7.  Gaslaser nach Anspruch 6, wobei die axiale Länge des über die Radialebene vorstehendenden Spielgelkörpers (1, 2) größer ist als die axiale Erstreckung der den Anregungsraum (5) zugekehrten Vorsprünge (14).

**Claims**

1.  Gas laser, particularly with radial excitation, which has two reflectors forming the limits of its excitation area in the axial direction, each of which is connected to a radial flange, and a bellows-type seal between the excitation area and radial flange, in which the radial flanges are connected with each other by means of spacer rods, characterised in that the reflectors or reflector bodies (1, 2) form an assembly with their associated radial flange (9, 10), that the side facing away from the excitation area (5) of each radial flange (9, 10) is welded gas tight via a welded-on bellows (15) to an end part (16, 17) sealing the internal space of the laser off from the external atmosphere and that the radial flanges (9, 10) are pivotably mounted on the spacer rods (11).

2.  Gas laser according to claim 1, in which each reflector body (1, 2) protrudes over the radial plane (28) of the radial flange (9, 10) facing the excitation area (5).

3.  Gas laser according to claim 2, in which the axial length of the reflector body (1, 2) protruding over the radial plane (28) is greater than the axial length of the bellows (15) facing the excitation area (5).

4.  Gas laser according to one of claims 1 to 3, in which each radial flange (9, 10) has at least one cooling duct (12) in the area near the reflector body (1, 2).

5.  Gas laser according to one of claims 1 to 4, in which the pivoting capacity of the radial flanges (9, 10) is adjustable by means of screw elements (25) attached to the middle of the spacer rods (11).

6.  Gas laser according to one of claims 1 to 5, in which the radial flanges (9, 10) have projections (14) on both sides to which the bellows (15) are welded.

7.  Gas laser according to claim 6, in which the axial length of the reflector body (1, 2) protruding over the radial plane is greater than the axial span of the projections (14) facing the excitation area (5).

**Revendications**

1. Laser à gaz, en particulier à excitation radiale, possédant deux miroirs, délimitant la chambre d'excitation dans la direction axiale et reliés chacun par une bride radiale, et un joint à soufflet entre la chambre d'excitation et la bride radiale, les brides radiales étant reliées entre elles par des entretoises, caractérisé en ce que les miroirs ou corps de miroir (1, 2) forment avec leurs brides radiales (9, 10) correspondantes une unité de construction, en ce que chaque bride radiale (9, 10), sur sa face opposée à la chambre d'excitation (5), est soudée de manière étanche aux gaz, par l'intermédiaire d'un soufflet (15) soudé, avec une pièce d'extrémité (16, 17) qui ferme l'intérieur du laser par rapport à l'atmosphère extérieure et en ce que les brides radiales (9, 10) sont montées de manière à pouvoir basculer sur les entretoises (11).

2. Laser à gaz selon la revendication 1, où chacun des corps de miroir (1, 2) est en saillie au-dessus du plan radial (28) de la bride radiale (9, 10) tourné vers la chambre d'excitation (5).

3. Laser à gaz selon la revendication 2, où la longueur axiale du corps de miroir (1, 2) saillant au-dessus du plan radial (28) est plus grande que la longueur axiale du soufflet (15) tourné vers la chambre d'excitation (5).

4. Laser à gaz selon l'une des revendications 1 à 3, où chacune des brides radiales (9, 10) présente dans sa partie proche du corps du miroir (1, 2) au moins un canal de refroidissement (12).

5. Laser à gaz selon l'une des revendications 1 à 4, où la position angulaire des brides radiales (9, 10) est réglée à l'aide d'éléments vissés (25) disposés sur les entretoises (11).

6. Laser à gaz selon l'une des revendications 1 à 5, où les brides radiales (9, 10) portent de part et d'autre des saillies (14) sur lesquelles sont soudés les soufflets (15).

7. Laser à gaz selon la revendication 6, où la longueur axial du corps de miroir (1, 2) saillant au-dessus du plan radial est plus grande que l'extension axiale des saillies (14) tournées vers la chambre d'excitation (5).

FIG. 1

FIG. 2